# EUROPEAN PATENT APPLICATION

(11) **EP 4 236 417 A1**
(43) Date of publication of application: **30.08.2023**
(21) Application number: 20958719.5
(22) Date of filing: 22.10.2020
(51) Int. Cl.: H04W 16/32, H04W 24/10, H04W 48/12

(54) **TERMINAL AND COMMUNICATION METHOD**

(71) Applicant: NTT DOCOMO, INC., Tokyo 100-6150 (JP)
(72) Inventor: OHARA, Tomoya, Tokyo 100-6150 (JP)
(74) Representative: Hoffmann Eitle
(86) International application number: PCT/JP2020/039800
(87) International publication number: WO 2022/085169

(57) **Abstract**

A terminal is provided which includes: a reception unit configured to receive, from a base station, an indication for activating a secondary cell and an indication for triggering a reference signal, via a cell other than the secondary cell; and a transmission unit configured to transmit, to the base station, channel state information based on a result of receiving the reference signal via the secondary cell.

## Description

### [FIELD OF THE INVENTION]

The present invention relates to a terminal and a communication method in a wireless communication system.

### [BACKGROUND OF THE INVENTION]

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

In NR Release 17, a mechanism for efficiently activating and deactivating a secondary cell group and a secondary cell has been discussed in MR-DC (Multi-RAT Dual-Connectivity). For example, the mechanism in the secondary cell group to be applied to (NG) EN-DC ((NG-RAN) E-UTRA-NR Dual Connectivity) and NR-DC (NR-NR Dual Connectivity) has been discussed. In addition, the mechanism in the secondary cell to be applied to NR-CA (NR Carrier aggregation) has been discussed. The mechanism is to be applied to FR1 (Frequency range) and FR2. In addition, it has been discussed to support changing and adding a primary secondary cell group cell.

### [Citation List]

### [Non-Patent Document]

[Non-Patent Document 1] 3GPP TS 38.300 V16.2.0 (2020-07)

### SUMMARY OF THE INVENTION

### [TECHNICAL PROBLEM]

When a terminal performs carrier aggregation operation, a secondary cell can be deactivated for the sake of reducing power consumption. When activating the deactivated secondary cell, a secondary cell activation delay (SCell activation delay) is required. Here, depending on the period of the synchronization signal, the secondary cell activation delay may become a large value, resulting in a large delay.

The present invention has been made in view of the above points, and it is an object to reduce the delay when activating the secondary cell in a wireless communication system.

### [SOLUTION TO PROBLEM]

According to the disclosed technology, a terminal is provided which includes: a reception unit configured to receive, from a base station, an indication for activating a secondary cell and an indication for triggering a reference signal, via a cell other than the secondary cell; and a transmission unit configured to transmit, to the base station, channel state information based on a result of receiving the reference signal via the secondary cell.

### [ADVANTAGEOUS EFFECTS OF INVENTION]

According to the disclosed technology, it is possible to reduce the delay when activating a secondary cell in a wireless communication system.

### BRIEF DESCRIPTION OF THE DRAWINGS

[Fig. 1] Fig. 1 is a drawing illustrating a configuration example of a wireless communication system according to an embodiment of the present invention.
[Fig. 2] Fig. 2 is a drawing illustrating an example of an activation of a secondary cell.
[Fig. 3] Fig. 3 is an example (1) of an activation of a secondary cell in an embodiment of the present invention.
[Fig. 4] Fig. 4 is an example (2) of an activation of a secondary cell in an embodiment of the present invention.
[Fig. 5] Fig. 5 is a sequence diagram illustrating an activation of a secondary cell in an embodiment of the present invention.
[Fig. 6] Fig. 6 is a drawing illustrating an example of a functional structure of a base station 10 according to an embodiment of the present invention.
[Fig. 7] Fig. 7 is a drawing illustrating an example of a functional structure of a terminal 20 according to an embodiment of the present invention.
[Fig. 8] Fig. 8 is a drawing illustrating an example of a hardware structure of a base station 10 or a terminal 20 according to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to the existing LTE, but not limited to the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, etc.,).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

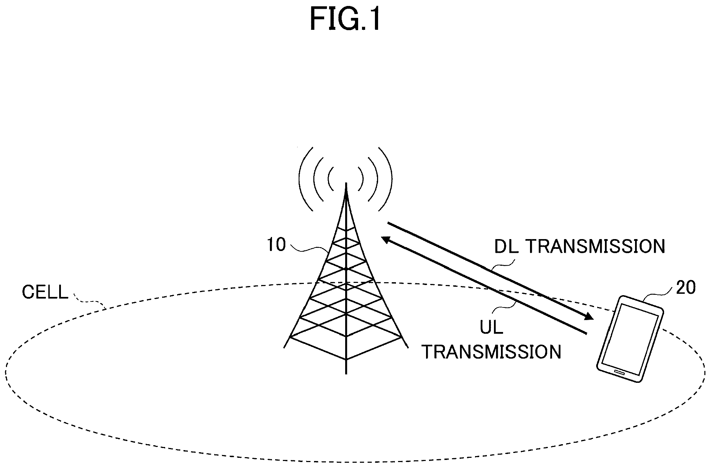

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication apparatus that provides one or more cells and performs wireless communications with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary Secondary cell group Cell) of another base station 10, according to DC (Dual Connectivity).

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10.

Here, in NR Release 17, a mechanism for efficiently activating and deactivating a secondary cell group and a secondary cell has been discussed in MR-DC (Multi-RAT Dual-Connectivity). For example, the mechanism in the secondary cell group to be applied to (NG) EN-DC ((NG-RAN) E-UTRA-NR Dual Connectivity) and NR-DC (NR-NR Dual Connectivity) has been discussed. In addition, the mechanism in the secondary cell to be applied to NR-CA (NR Carrier aggregation) has been discussed. The mechanism is to be applied to FR1 (Frequency range) and FR2. In addition, it has been discussed to support changing and adding a primary secondary cell group cell.

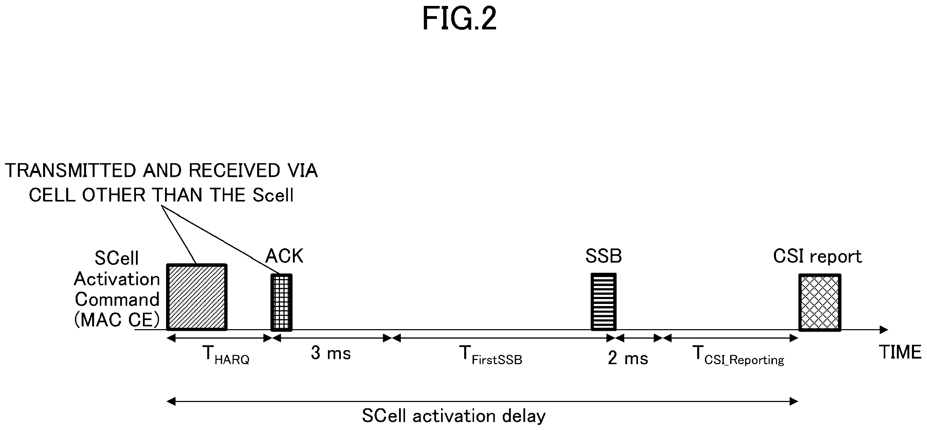

Fig. 2 is a drawing illustrating an example of an activation of a secondary cell. When a terminal performs carrier aggregation operation, a secondary cell can be deactivated for the sake of reducing power consumption. When activating the deactivated secondary cell, a secondary cell activation delay (SCell activation delay) is required as shown in Fig. 2.

As shown in Fig. 2, in order to activate the secondary cell, the base station 10 transmits a secondary cell activation command (SCell Activation Command) and the terminal 20 transmits an ACK, in a cell other than the secondary cell.

For example, under a certain condition, in a case where the secondary cell activation command is received in slot n, an operation (e.g., CSI reporting) at the time of the active state is started in the activated secondary cell, by the time "slot n + T_{HARQ} + T_{activation_time} + T_{CSI_Reporting}".

T_{HARQ} is the time from the downlink transmission containing the MAC (Medium Access Control) -CE (Control Element) of the secondary cell activation command until the ACK transmission of the terminal 20.

T_{activation_time} includes: 3 ms corresponding to MAC-CE UE processing time and RF warmup/retuning time; T_{firstSSB} corresponding to the time after the above-described 3 ms until the first SSB resource; and 2 ms corresponding to SSB processing time. Note that T_{activation_time} also includes AGC (Auto gain control) configuration time, etc.

T_{CSI_Reporting} includes: the time after the above-described 2 ms until the CSI measurement resource; the terminal processing time for the CSI measurement and report; and the time until the CSI reporting resource.

Here, in NR, there is a case in which the SSB period (SSB periodicity) is a large value (for example, 20 ms, 160 ms, etc.), and among the secondary activation delays, T_{firstSSB} becomes a relatively large value, resulting in a large delay.

Therefore, because the time and frequency tracking, AGC configuration, etc., that are supposed to be performed based on the SSB can be performed also based on reference signals such as TRS (Tracking reference signal) and CSI-RS (Channel state information Reference signal), the secondary cell activation delay can be shortened if the TRS, CSI-RS, etc., can be received earlier than the SSB.

For example, according to the DCI (Downlink control information), together with an indication of secondary cell activation, the information triggering a reference signal may be indicated. The reference signal may be TRS, CSI-RS, or other reference signals. In one DCI, the activation of one or more secondary cells may be indicated, and information triggering a reference signal corresponding to each secondary cell for which activation is indicated, may be indicated. In addition, the reference signal may be an aperiodic reference signal, a semi-persistent reference signal, or a periodic reference signal.

An offset from the PDCCH containing the DCI to the triggered reference signal may be indicated. Alternatively, activation of a reference signal (i.e., start of transmission of the reference signal) at a pre-configured position of the reference signal, may be indicated or assumed. In addition, one or more reference signals may be triggered by the DCI.

The information for indicating the activation of the secondary cell and for triggering the reference signal, may be indicated by an existing DCI format or may be indicated by a new DCI format. For example, the indication may be performed by replacing the existing DCI field, or by using a new DCI field.

In addition, in a case where the reference signal is an aperiodic reference signal or a semi-persistent reference signal, configuration and processing may be performed independently. That is, the aperiodic reference signal or the semi-persistent reference signal need not assume a relationship with the periodic reference signal. Note that, conventionally, when triggering a normal aperiodic reference signal without secondary cell activation, under a certain condition (for example, in a case where QCL type D is not configured in the CSI-RS configuration, in a case where the parameter minimumSchedulingOffset used for cross-carrier scheduling is not configured), there is a limitation in which the aperiodic reference signal must be placed in the same slot as the PDCCH containing the triggering DCI.

When triggering the reference signal with secondary cell activation by the DCI, the aperiodic TRS or aperiodic CSI-RS may be placed in a slot different from the PDCCH containing the triggering DCI.

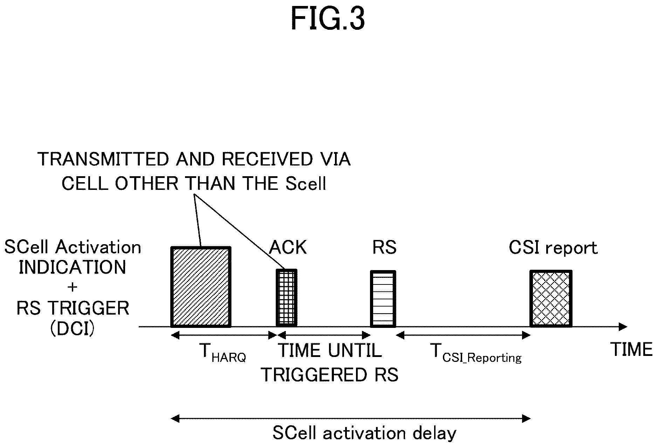

Fig. 3 is an example (1) of an activation of a secondary cell in an embodiment of the present invention. As shown in Fig. 3, the DCI for indicating a secondary cell activation indication and a reference signal (RS) trigger, is transmitted in a cell other than the secondary cell to be activated. After T_{HARQ} from the DCI transmission, an ACK is transmitted in the cell. As shown in Fig. 3, the secondary activation delay includes T_{HARQ}, the time from the ACK transmission to the triggered reference signal, and T_{CSI_Reporting} from the reference signal to the CSI report. Note that, for example, the cell in which the DCI is received and the secondary cell to be activated, may be cells in different frequency bands, such as FR1 and FR2, may be cells in different frequency bands within FR1, or may be cells in the same frequency band.

Note that the terminal 20 need not assume ACK transmission, and may assume that the time from the DCI to the reference signal corresponds to the time until the triggered reference signal, and may assume the time, in which T_{CSI_Reporting} is further added to the corresponded time, as the secondary activation delay.

The DCI containing the indication of secondary cell activation and the information triggering the reference signal, may simultaneously contain normal data scheduling information, or need not contain normal data scheduling information and may mainly contain information related to the indication of secondary cell activation and the information triggering the reference signal. In addition, depending on whether or not the normal data scheduling information is simultaneously included, the information included as the information indicating an indication of the secondary cell activation and triggering the reference signal, may be changed. For example, the number of secondary cells that can be simultaneously activated while triggering the reference signal may be changed, or whether the secondary cells to be indicated are to be grouped together may be changed.

In addition, for example, the secondary cell activation may be indicated via MAC-CE while indicating information triggering the reference signal. The reference signal may be TRS, CSI-RS, or other reference signals. In addition, the reference signal may be an aperiodic reference signal, a semi-persistent reference signal, or a periodic reference signal. In addition, in a case where the reference signal is an aperiodic reference signal or a semi-persistent reference signal, configuration and processing may be performed independently. That is, the aperiodic reference signal or the semi-persistent reference signal need not assume a relationship with the periodic reference signal.

Activation of a reference signal (i.e., start of transmission of the reference signal) at a pre-configured position of the reference signal, may be indicated or assumed by the trigger. In addition, one or more reference signals may be triggered by the MAC CE.

The information for indicating the secondary cell activation and for triggering the reference signal, may be indicated by an existing MAC-CE or may be indicated by a new MAC-CE. For example, the indication may be performed by replacing the existing MAC-CE, or by using a new MAC-CE. The secondary cell activation and the reference signal trigger, may be indicated together by one MAC-CE, or may be indicated individually by different MAC-CEs.

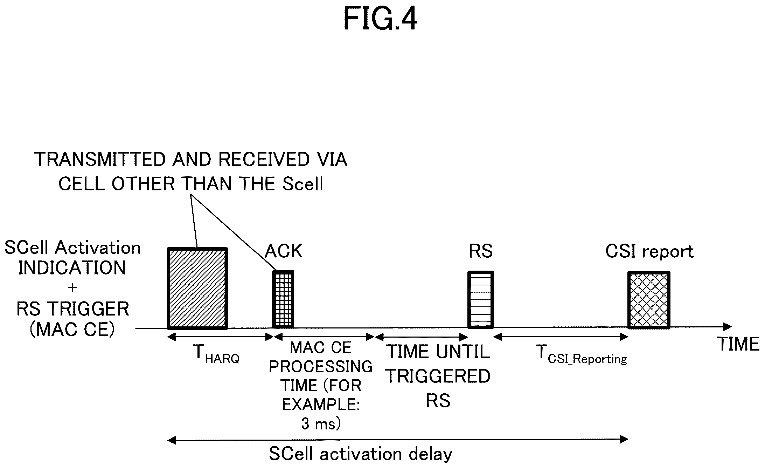

Fig. 4 is an example (2) of an activation of a secondary cell in an embodiment of the present invention. As shown in Fig. 4, the MAC-CE for indicating a secondary cell activation indication and a reference signal (RS) trigger, is transmitted in a cell other than the secondary cell to be activated. After T_{HARQ} from the MAC-CE transmission, an ACK is transmitted in the cell. As shown in Fig. 4, the secondary activation delay includes T_{HARQ}, the MAC-CE processing time (e.g., 3 ms), the time until the triggered reference signal, and T_{CSI_Reporting} from the reference signal to the CSI report. Note that, for example, the cell in which the MAC-CE is received and the secondary cell to be activated, may be cells in different frequency bands, such as FR1 and FR2, may be cells in different frequency bands within FR1, or may be cells in the same frequency band.

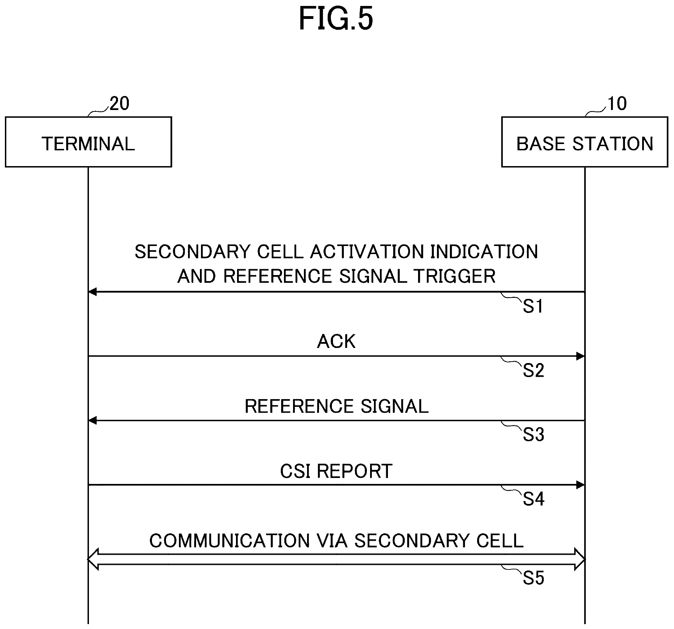

Fig. 5 is a sequence diagram illustrating an activation of a secondary cell in an embodiment of the present invention. In step S1, the base station 10 transmits a secondary cell activation indication and a reference signal trigger to the terminal 20. As described above, the secondary cell activation indication and the reference signal trigger may be indicated via DCI or may be indicated via MAC-CE. In subsequent step S2, the terminal 20 transmits an ACK to the base station 10.

In step S3, the base station 10 transmits the triggered reference signal to the terminal 20. In subsequent step S4, the terminal 20 transmits a CSI report based on a result of reference signal measurement to the base station 10, and the secondary cell is activated. In step S5, communications are performed between the base station 10 and the terminal 20 via the activated secondary cell.

In addition, an operation of the terminal 20 in a case where the secondary cell activation indication via DCI is received during the processing of the secondary cell activation indication via MAC-CE (for example, during the MAC-CE processing time), may be specified or indicated.

For example, the terminal 20 is not required to assume reception of a secondary cell activation indication or a reference signal trigger indication via DCI during the processing of a secondary cell activation indication via MAC-CE. That is, the secondary cell activation indication or the reference signal trigger via DCI may be ignored.

For example, in a case where the secondary cell activation indication or reference signal trigger indication via DCI is received during the processing of the secondary cell activation indication via MAC-CE, the reference signal may be received and processed based on the reference signal trigger indication information via DCI while continuing the secondary cell activation processing via MAC-CE.

For example, in a case where the secondary cell activation indication or reference signal trigger indication via DCI is received during the processing of the secondary cell activation indication via MAC-CE, the secondary cell activation processing via MAC-CE may be stopped (the secondary cell activation indication may be discarded), and the reference signal may be received and processed based on the secondary cell activation indication and/or the reference signal trigger indication via DCI.

For example, which of: the secondary cell activation indication or reference signal trigger indication via MAC-CE; or the secondary cell activation indication or reference signal trigger indication via DCI, is to be prioritized, may be indicated in advance.

The above-described triggered reference signal is transmitted in the secondary cell to be activated. With respect to the above, at that time, the secondary cell is deactivated, and thus, the BWP (Bandwidth part) of the secondary cell is in a deactivated state and the reference signal cannot be received via the BWP that is not activated, according to the current specification.

Therefore, the reference signal triggered by the secondary cell activation may be received via the BWP that is not activated. For example, which BWP is to be used as a BWP for receiving the reference signal triggered by the secondary cell activation, may be indicated. Which BWP is to be used may be indicated by the MAC-CE triggering the reference signal, which BWP is to be used may be indicated by the DCI triggering the reference signal, or which BWP is to be used may be indicated in advance by RRC (Radio Resource Control) signaling. Which BWP is to be used may be indicated by a bandwidth part indicator field included in the DCI triggering the reference signal.

For example, which BWP is to be used as a BWP for receiving the reference signal triggered by the secondary cell activation, may be specified by the specification. For example, a BWP indicated by the RRC parameter firstActiveDownlinkBWP may be used, or DefaultBWP may be used.

As described above, in a case where which BWP is to be used is indicated, the specified BWP may be used as a BWP for receiving the reference signal triggered in accordance with the secondary activation, and in a case where the BWP is not specified, a defined BWP such as firstActiveDownlinkBWP or defaultBWP may be used as a default operation.

According to the above-described embodiment, the terminal 20 can receive the secondary cell activation indication and an indication triggering the reference signal via DCI or MAC-CE, and can reduce the delay before the secondary cell activation.

That is, it is possible to reduce the delay when activating a secondary cell in a wireless communication system.

### (Apparatus configuration)

Next, a functional configuration example of the base station 10 and the terminal 20 for performing the processes and operations described above will be described. The base station 10 and terminal 20 include functions for implementing the embodiments described above. It should be noted, however, that each of the base station 10 and the terminal 20 may include only some of the functions in an embodiment.

### <Base station 10>

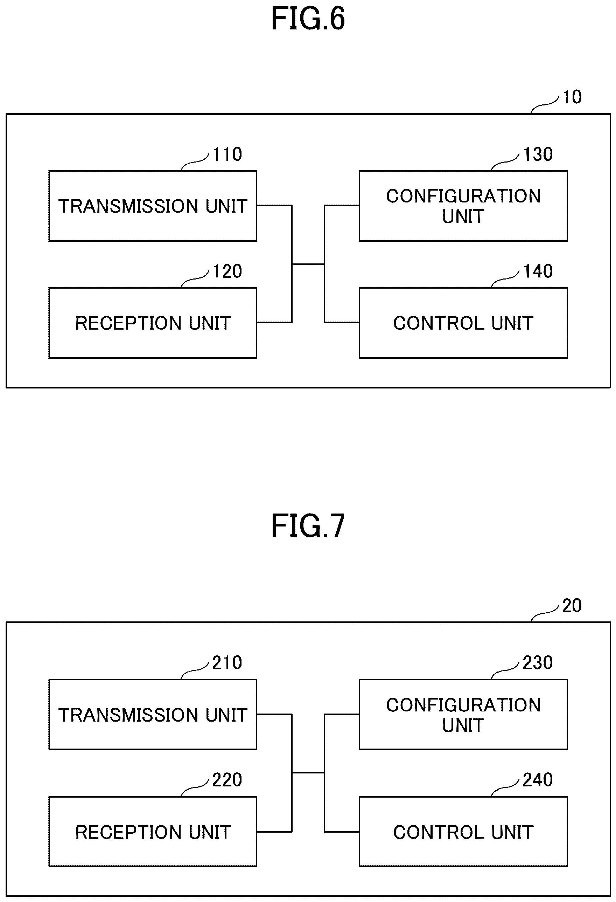

Fig. 6 is a drawing illustrating an example of a functional structure of a base station 10 according to an embodiment of the present invention. As shown in Fig. 6, the base station 10 includes a transmission unit 110, a reception unit 120, a configuration unit 130, and a control unit 140. The functional structure illustrated in Fig. 6 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, configurations related to the secondary cell activation of the terminal 20.

The control unit 140 performs control related to the secondary cell activation as described in the embodiments. The functional units related to signal transmission in the control unit 140 may be included in the transmission unit 110, and the functional units related to signal reception in the control unit 140 may be included in the reception unit 120.

### <Terminal 20>

Fig. 7 is a drawing illustrating an example of a functional structure of a terminal 20 according to an embodiment of the present invention. As shown in FIG. 7, the terminal 20 includes a transmission unit 210, a reception unit 220, a configuration unit 230, and a control unit 240. The functional structure illustrated in Fig. 7 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from another terminal 20, PSCCH, PSSCH, PSDCH, or PSBCH.

The configuration unit 230 stores various configuration information items received by the reception unit 220 from the base station 10. In addition, the configuration unit 230 stores pre-configured configuration information. Contents of the configuration information are, for example, configurations related to the secondary cell activation of the terminal 20.

The control unit 240 performs control related to the secondary cell activation as described in the embodiments. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 6 and Fig. 7), functional unit blocks are shown. The functional blocks (function units) are realized by a freely-selected combination of hardware and/or software. Further, the realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

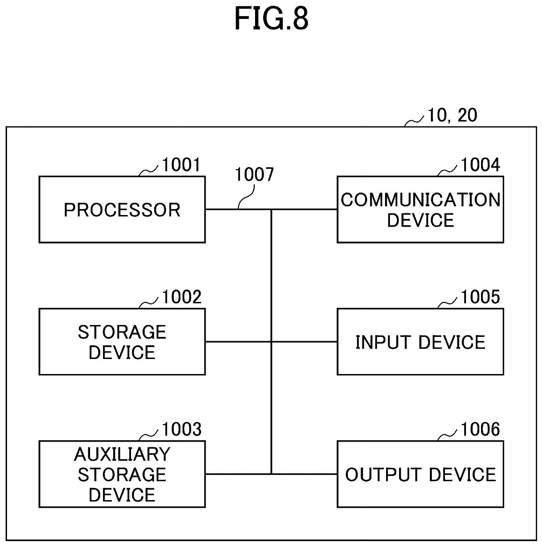

For example, the base station 10, terminal 20, etc., according to an embodiment of the present disclosure may function as a computer for processing the radio communication method of the present disclosure. Fig. 8 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 6 may be realized by control programs that are stored in the storage device 1002 and are executed by the processor 1001. Further, for example, the control unit 240 of the terminal 20 illustrated in Fig. 7 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention, a terminal is provided which includes: a reception unit configured to receive, from a base station, an indication for activating a secondary cell and an indication for triggering a reference signal, via a cell other than the secondary cell; and a transmission unit configured to transmit, to the base station, channel state information based on a result of receiving the reference signal via the secondary cell.

According to the above-described configuration, the terminal 20 can receive a secondary cell activation indication and an indication triggering the reference signal via DCI or MAC-CE, and can reduce the delay before the secondary cell activation. That is, it is possible to reduce the delay when activating a secondary cell in a wireless communication system.

The reception unit may receive the indication for activating the secondary cell and the indication for triggering the reference signal, via DCI (Downlink Control Information) that is layer 1 signaling. According to the above-described configuration, the terminal 20 can receive a secondary cell activation indication and an indication triggering the reference signal via DCI, and can reduce the delay before the secondary cell activation.

The reception unit may receive the indication for activating the secondary cell and the indication for triggering the reference signal, via MAC-CE (Medium Access Control - Control Element) that is layer 2 signaling. According to the-described configuration, the terminal 20 can receive a secondary cell activation indication and an indication triggering the reference signal via MAC-CE, and can reduce the delay before the secondary cell activation.

The reference signal may be a TRS (Tracking reference signal) or a CSI-RS (Channel state information reference signal). According to the above-described configuration, the terminal 20 can receive a secondary cell activation indication and an indication triggering the reference signal via DCI or MAC-CE and can reduce the delay before the secondary cell activation.

The reception unit may receive the reference signal via a BWP (Bandwidth part) that is not activated. According to the above-described configuration, the terminal 20 can receive a secondary cell activation indication and an indication triggering the reference signal via DCI or MAC-CE and can reduce the delay before the secondary cell activation.

A communication method performed by a terminal is provided. The communication method includes: receiving, from a base station, an indication for activating a secondary cell and an indication for triggering a reference signal, via a cell other than the secondary cell; and transmitting, to the base station, channel state information based on a result of receiving the reference signal via the secondary cell.

According to the above-described configuration, the terminal 20 can receive a secondary cell activation indication and an indication triggering the reference signal via DCI or MAC-CE, and can reduce the delay before the secondary cell activation. That is, it is possible to reduce the delay when activating a secondary cell in a wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services in the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. At least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an exclusive or.

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Note that, in the present disclosure, CSI is an example of channel state information. DCI is an example of a Layer 1 signaling. MAC CE is an example of layer 2 signaling.

As described above, the present invention has been described in detail. It is apparent to a person skilled in the art that the present invention is not limited to the one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage apparatus
1003 Auxiliary storage apparatus
1004 Communication apparatus
1005 Input apparatus
1006 Output device

## Claims

1. A terminal comprising:
a reception unit configured to receive, from a base station, an indication for activating a secondary cell and an indication for triggering a reference signal, via a cell other than the secondary cell; and
a transmission unit configured to transmit, to the base station, channel state information based on a result of receiving the reference signal via the secondary cell.

2. The terminal according to claim 1, wherein the reception unit receives the indication for activating the secondary cell and the indication for triggering the reference signal, via DCI (Downlink Control Information) that is layer 1 signaling.

3. The terminal according to claim 1, wherein the reception unit receives the indication for activating the secondary cell and the indication for triggering the reference signal, via MAC-CE (Medium Access Control - Control Element) that is layer 2 signaling.

4. The terminal according to claim 2 or 3, wherein the reference signal is a TRS (Tracking reference signal) or a CSI-RS (Channel state information reference signal).

5. The terminal according to claim 4, wherein the reception unit receives the reference signal via a BWP (Bandwidth part) that is not activated.

6. A communication method performed by a terminal, the communication method comprising:
receiving, from a base station, an indication for activating a secondary cell and an indication for triggering a reference signal, via a cell other than the secondary cell; and
transmitting, to the base station, channel state information based on a result of receiving the reference signal via the secondary cell.
